# FASCICULE DE BREVET EUROPEEN

(11) **EP 2 042 409 B1**
(45) Date de publication et mention de la délivrance du brevet: **26.05.2010**
(21) Numéro de dépôt: 08163695.3
(22) Date de dépôt: 04.09.2008
(51) Int. Cl.: B62D 33/04, B62D 33/08, B62D 25/08, B60P 3/42

(54) **Carrosserie allongée simplifiée d'un véhicule automobile**
Vereinfachte verlängerte Karosserie eines Kraftfahrzeugs
Simplified elongated automobile body

(30) Priorité: 28.09.2007 FR 0757959
(43) Date de publication de la demande: 01.04.2009
(73) Titulaire: Peugeot Citroën Automobiles SA, 78140 Vélizy-Villacoublay (FR)
(72) Inventeur: Bouchy, Laurent, 91590, BAULNE (FR); Rousseau, Xavier, Francis, Jean-Louis, 91220, BRETIGNY SUR ORGE (FR)
(74) Mandataire: Allain, Laurent

(56) Documents cités:
- EP-A- 0 338 999
- FR-A- 2 771 697
- US-A- 4 887 859

## Description

La présente invention concerne une carrosserie allongée simplifiée d'un véhicule automobile.

La présente invention s'applique plus particulièrement à des véhicules automobiles utilitaires fermés à l'arrière par deux battants de porte ou un hayon. De tels véhicules sont pourvus d'un anneau arrière destiné à parer à une torsion éventuelle de leur caisson. La carrosserie allongée est dérivée d'une carrosserie courte comprenant un pied de volet avec une feuillure en appui sur le côté de l'habitacle tout en gardant le même empattement.

Afin de pouvoir proposer à la clientèle la plus grande diversité de variantes d'un modèle de véhicule automobile donné, on développe un modèle de base et on y ajoute des éléments complémentaires spécifiques pour la variante que l'on souhaite obtenir.

Ainsi, par exemple, certains fabricants de véhicules automobiles et certains carrossiers ont recours à une technique hybride, c'est-à-dire des pièces d'extension sont collées sur la carrosserie de base et vissées sur celle-ci à des endroits préparés à cet effet. A la fin, la caisse ainsi rallongée est marouflée pour être peinte sur une petite ligne manuelle.

Cette façon de procéder est particulièrement d'usage lorsqu'une variante d'un modèle de véhicule automobile ne représente qu'un faible pourcentage de la cadence journalière de fabrication.

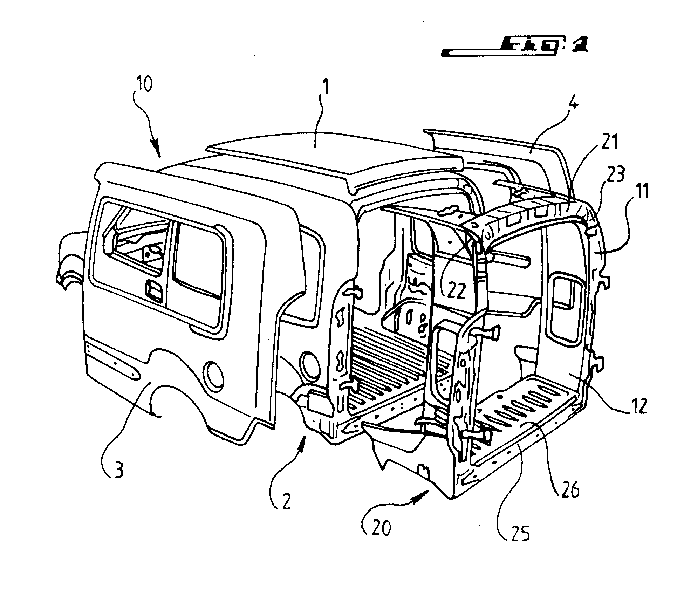

La figure 1 des dessins annexés représente cette conception d'usage à l'exemple d'un véhicule automobile utilitaire de type fourgonnette fermé à l'arrière par deux battants de porte. On voit sur cette vue en perspective très schématique une carrosserie courte 10 avec un anneau arrière de base 2. Cette carrosserie 10 est rallongée par un anneau arrière spécifique 20 ayant sa propre rigidité, ainsi que trois pièces de robe spécifique 1, 2, 3 pour la finition et le style. Cet anneau arrière comporte en partie supérieure une traverse de pavillon 21 et deux goussets latéraux 22, 23, en partie latérale une gouttière 11 et un pied de volet 12 et en partie inférieure un panneau arrière 25 avec sa doublure, ainsi qu'une allonge de plancher arrière 26.

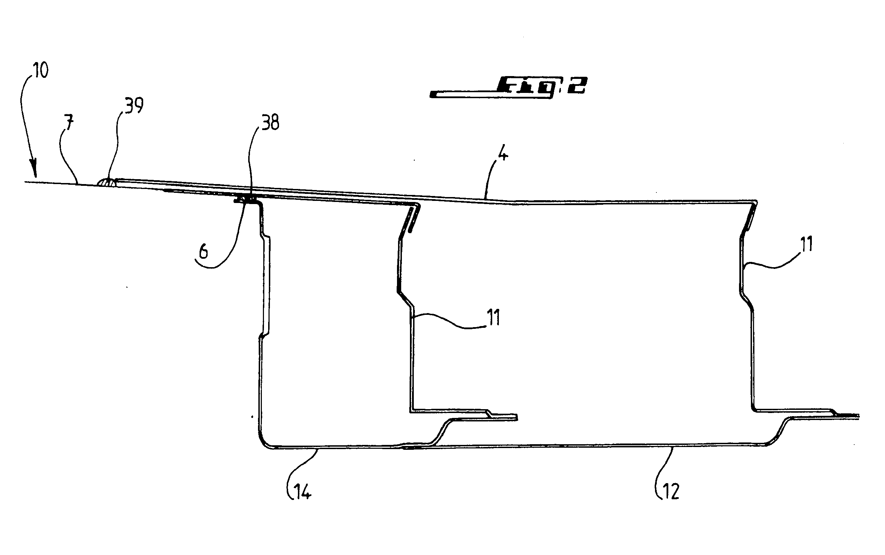

La figure 2 représente la solution classique en une coupe horizontale d'une partie droite arrière de la carrosserie, vue dans le sens de la marche avant du véhicule. La partie gauche du pied de volet 14 de la carrosserie courte est en appui, moyennant une feuillure 6 et un cordon de calage 38, sur un panneau 7 de l'habitacle d'un véhicule automobile. Le pied de volet 14 est allongé vers l'arrière du véhicule automobile par un pied de volet long et spécifique 12.

La figure 2 montre aussi la position d'une gouttière 11 que l'on retrouve également en position carrosserie courte. Enfin, la figure 2 montre le marouflage 39 entre le côté d'habitacle long 4 et le côté d'habitacle 7 de la carrosserie courte 10.

Cette conception traditionnelle est assez coûteuse sous plusieurs aspects. En premier, les coûts pour la conception et la réalisation de l'outillage nécessaire pour produire les pièces d'extension sont très élevés, notamment par rapport à la production relativement faible pour laquelle ces outils sont utilisés. De plus, cette conception demande une logistique complexe dans le sens de la mise en stock puis du transport des pièces d'extension vers l'atelier ou le poste de montage. Ensuite, aussi bien en cas de montage robotisé qu'en cas de montage par mécanicien, les pièces d'extension demandent des manipulations particulières, spécifiques selon les pièces.

Ainsi, le document FR 2771697 A décrit une carrosserie allongée d'un véhicule automobile utilitaire selon le préambule de la revendication 1.

Le but de l'invention est de proposer une conception d'une carrosserie allongée qui permette de simplifier la fabrication de la carrosserie et qui permette notamment de réduire sensiblement les coûts de fabrication et de stockage des pièces d'extension et les coûts de main-d'oeuvre ou d'intervention de robots lors de la fabrication.

Le but de l'invention est atteint avec une carrosserie allongée d'un véhicule automobile utilitaire, selon les caractéristiques de la revendication 1. Un mode de réalisation préféré est défini par la revendication 2.

La carrosserie allongée selon l'invention est donc issue d'une extension des parties arrière du plancher, du pavillon et des côtés d'habitacle. Grâce à ces extensions, on obtient une reconduction de l'anneau arrière par insertion de sept éléments spécifiques entre la carrosserie initiale courte et l'anneau arrière ainsi déplacé, sans modification de ce dernier.

Grâce à cette disposition de l'invention, l'outillage utilisé pour la carrosserie de base peut être utilisé aussi pour la carrosserie allongée.

Sur le point de la stabilité de la carrosserie, les dispositions de l'invention apportent l'avantage de pouvoir reconduire une torsion de l'anneau arrière identique à la version courte ou de base de la carrosserie.

Le but de l'invention est également atteint avec un véhicule automobile ayant une carrosserie allongée telle que décrite ci avant.

D'autres caractéristiques et avantages de la présente invention ressortiront de la description ci-après d'un mode de réalisation de l'invention. La description est faite en référence aux dessins annexés dans lesquels :
- les figures 1 et 2 représentent le principe d'une carrosserie allongée de façon traditionnelle respectivement dans une vue en perspective et dans une coupe horizontale ;
- la figure 3 représente les dispositions d'une carrosserie allongée selon l'invention dans une vue en perspective ;
- la figure 4 représente la carrosserie de la figure 3 dans une vue éclatée ; et
- les figures 5 et 6 représentent la partie arrière gauche de la carrosserie des figures 3 et 4 en une coupe horizontale simplifiée.

Les figures 1 et 2 des dessins annexés représentent la conception d'usage d'un allongement d'une carrosserie à l'exemple d'un véhicule automobile utilitaire de type fourgonnette fermé à l'arrière par deux battants de porte. La description en est faite plus haut.

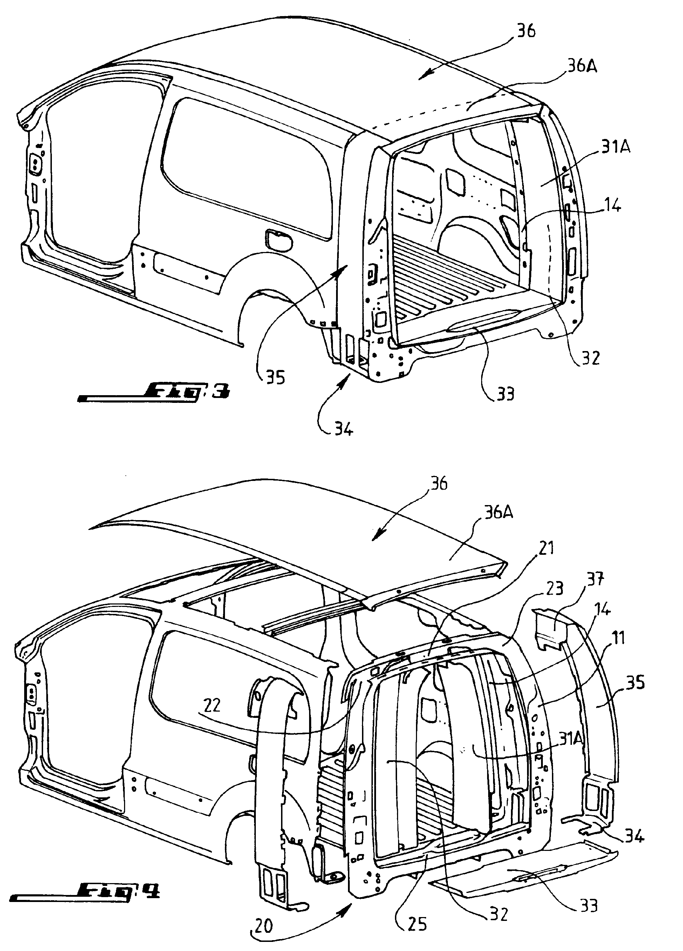

Les figures 3 et 4 montrent les dispositions de l'invention pour une carrosserie allongée respectivement dans une vue en perspective avec vue sur la face arrière de la carrosserie et dans une vue éclatée. Sur ces deux figures, les deux battants fermant le caisson à l'arrière ont été ôtés pour augmenter la clarté de la représentation.

On observe tout d'abord que l'invention reprend les dispositions antérieures représentées sur les figures 1 et 2. Ainsi, la carrosserie allongée comprend un anneau arrière 20 comportant en partie supérieure une traverse de pavillon 21, deux goussets 22, 23, en partie latérale une gouttière 11 et en partie inférieure un panneau arrière 25 avec sa doublure.

L'allongement de la carrosserie est obtenu par insertion de sept éléments d'extension ou pièces de rallongement 31 à 37 entre la carrosserie de base 10, ou carrosserie courte, et l'anneau arrière 20. Ainsi, comme cela est représenté sur la figure 4, on trouve à l'intérieur de la carrosserie une extension de pied de volet 31A associée à un raidisseur de pied de volet 32, ainsi qu'une extension de plancher 33. A l'extérieur de la carrosserie, on trouve une extension de fermeture d'aile arrière 34, une extension de côté d'habitacle 35, une extension de gousset supérieur 37 et un pavillon spécifique 36. Le pavillon 36 incorpore une partie d'extension 36A qui, elle, constitue un des sept éléments d'extension de la carrosserie.

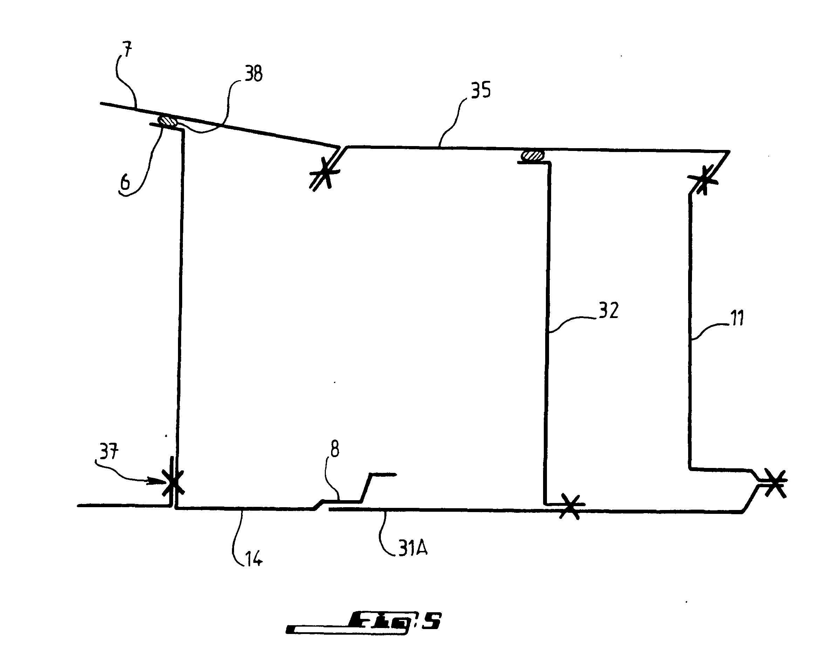

La figure 5 représente la solution de la figure 4 en une coupe horizontale d'une partie droite arrière de la carrosserie, vue dans le sens de la marche avant du véhicule. La partie gauche de l'extension de pied de volet 31A est en appui, moyennant une feuillure 8, sur le pied de volet 14 de la carrosserie courte. Pour parer la carrosserie contre une tension autour de l'axe longitudinal de la carrosserie, un raidisseur d'extension 32 est monté entre le pied de volet spécifique 31A et l'extension 35 du côté d'habitacle.

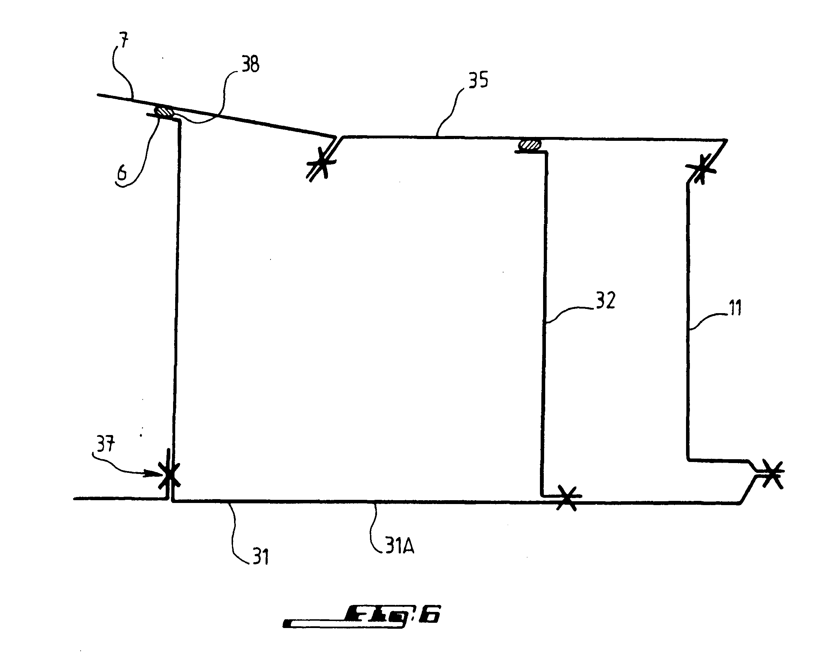

La figure 6 représente, également en une coupe horizontale d'une partie droite arrière de la carrosserie, une variante de la solution de la figure 5. L'extension de pied de volet 31A associé au pied de volet 14 est réalisée sous la forme d'un élément distinct qui remplace ces deux pièces. Le choix d'un pied de volet spécifique 31 en tant que pied de volet long relève purement d'une question de style intérieur. Le pied de volet 31 incorpore une partie d'extension 31A qui, elle, constitue un des sept éléments d'extension de la carrosserie.

Les figures 5 et 6 représentent, outre la position de la gouttière 11, enfin aussi la position des points de soudure 37 symbolisés par une croix et la position de cordons de calage 38, ces deux numéros de référence n'étant portés aux figures 5 et 6 qu'une seule fois chacun.

## Revendications

1. Carrosserie allongée d'un véhicule automobile utilitaire, la carrosserie allongée étant dérivée d'une carrosserie courte comprenant un anneau arrière (20) et un pied de volet (14) avec une feuillure en appui sur un côté d'habitacle, ladite carrosserie allongée comprenant des pièces de rallongement (31 à 37) de la carrosserie reconduisant l'anneau arrière (20) complet en le déplaçant de la valeur de l'allongement dans le sens contraire à la marche avant du véhicule, lesdites pièces de rallongements (31 - 37) comportant une partie d'extension (31A) de pied de volet associée à un raidisseur de pied de volet (32), une extension de plancher (33), une extension de fermeture d'aile arrière (34), une extension de côté d'habitacle (35), une extension de gousset supérieur (37) et une partie d'extension (36A) de pavillon, **caractérisée en ce que** les pièces de rallongements (31 - 37) comportent un pavillon spécifique (36) incorporant la partie d'extension (36A) de pavillon.

2. Carrosserie selon la revendication 1, **caractérisée en ce que** les pièces de rallongements (31 - 37) comportent un pied de volet spécifique (31) incorporant la partie d'extension (31A) de pied de volet.

3. Véhicule automobile, **caractérisé en ce qu'**il comprend une carrosserie selon l'une quelconque des revendications 1 à 2.

## Claims

1. Elongated body for a utility automobile, the elongated body being derived from a short body comprising a rear ring (20) and a flap base (14) with a rebate bearing on a side of the passenger compartment, said elongated body comprising extension pieces (31 to 37) for the body that move back the complete rear ring (20) by displacing it by the value of the elongation in the direction opposite to the forward movement of the vehicle, said extension pieces (31-37) comprising a flap base extension part (31A) associated with a flap base stiffener (32), a floor extension (33), a rear quarter panel closing extension (34), a passenger compartment side extension (35), a top gusset extension (37) and a roof extension part (36A), **characterized in that** the extension pieces (31-37) include a specific roof (36) incorporating the roof extension part (36A).

2. Body according to Claim 1, **characterized in that** the extension pieces (31-37) comprise a specific flap base (31) incorporating the flap base extension part (31A).

3. Automobile, **characterized in that** it comprises a body according to any one of Claims 1 or 2.

## Patentansprüche

1. Längliche Karosserie eines Nutzkraftwagens, wobei die längliche Karosserie von einer kurzen Karosserie abgeleitet ist, die einen hinteren Ring (20) und eine Klappenbasis (14) mit einer Falz (6) in Anlage an einer Seite der Fahrgastzelle (17) umfasst, wobei die längliche Karosserie Erweiterungsteile (31 bis 27) der Karosserie aufweist, die den ganzen hinteren Ring (20) fortsetzen, indem sie ihn um das Erweiterungsausmaß in die der Fahrtrichtung des Fahrzeugs entgegengesetzte Richtung verschieben, wobei die Erweiterungsteile (31 - 37) einen Verlängerungsteil (31A) der Klappenbasis, der einer Versteifung der Klappenbasis (32) zugeordnet ist, eine Bodenverlängerung (33), eine Heckflügelabschlussverlängerung (34), eine Verlängerung der Fahrgastzellenseite (35), eine Verlängerung des oberen Eckteils (37) und einen Verlängerungsteil (36A) des Dachs umfassen, **dadurch gekennzeichnet, dass** die Erweiterungsteile (31 - 37) ein spezielles Dach (36) umfassen, das den Verlängerungsteil (36A) des Dachs enthält.

2. Karosserie nach Anspruch 1, **dadurch gekennzeichnet, dass** die Erweiterungsteile (31 - 37) eine spezielle Klappenbasis (31) umfassen, die den Verlängerungsteil (31A) der Klappenbasis enthält.

3. Kraftfahrzeug, **dadurch gekennzeichnet, dass** es eine Karosserie nach einem der Ansprüche 1 bis 2 umfasst.
